# EUROPÄISCHE PATENTSCHRIFT

(11) **EP 4 198 393 B1**
(45) Veröffentlichungstag und Bekanntmachung des Hinweises auf die Patenterteilung: **10.04.2024**
(21) Anmeldenummer: 21215985.9
(22) Anmeldetag: 20.12.2021
(51) Int. Cl.: F23D 14/66, F23L 15/04, F28D 7/16, F28D 21/00

(54) **REKUPERATORBRENNER**
RECUPERATIVE BURNER
BRÛLEUR RÉCUPÉRATEUR

(43) Veröffentlichungstag der Anmeldung: 21.06.2023
(73) Patentinhaber: WS-Wärmeprozesstechnik GmbH, 71272 Renningen (DE)
(72) Erfinder: WÜNNING, Joachim A., 71229 Leonberg (DE); WÜNNING, Joachim G., 71229 Leonberg (DE)
(74) Vertreter: Patentanwälte Ruff, Wilhelm, Beier, Dauster & Partner mbB

(56) Entgegenhaltungen:
- EP-A1- 0 039 762
- EP-A1- 1 995 516
- WO-A1-2019/155357
- DE-A1- 4 420 477
- US-A1- 2019 186 361

## Beschreibung

Die Erfindung betrifft einen Rekuperator für einen Rekuperatorbrenner sowie einen Rekuperatorbrenner.

Bei einem Rekuperatorbrenner wird eine zugeführte Verbrennungsluft mittels eines abgeführten Abgases vorgewärmt. Rekuperatorbrenner sind beispielsweise aus EP 1 995 516 A1 bekannt. Sie dienen unter anderem dem Erzeugen von Prozesswärme, beispielsweise der direkten oder indirekten Beheizung von Industrieöfen. Bei der direkten Beheizung findet eine Verbrennung in einem Ofenraum statt. Bei der indirekten Beheizung findet die Verbrennung in einem gegenüber dem Ofenraum abgeschlossenen Raum, beispielsweise innerhalb eines in den Ofenraum ragenden, gegen diesen jedoch abgeschlossenen Strahlrohrs statt, wobei der Raum oder das Stahlrohr durch die Verbrennung erwärmt wird und Wärmestrahlung abgibt.

Moderne Rekuperatorbrenner erreichen für fossile Brenngase mit Heizwerten über etwa 5 kWh/m3, wie Erdgas oder Propan, eine relative Luftvorwärmung von über 80% in Bezug auf eine Abgaseintrittstemperatur. Damit steigt ein feuerungstechnischer Wirkungsgrad bis auf über 85%.

In Zukunft werden zur Erzeugung von Prozesswärme fossile Brenngase in zunehmendem Maße durch Schwachgase ersetzt. Als Schwachgase werden Gase und Gas-Gemische mit geringerem Heizwert bezeichnet, beispielsweise Gas-Gemische, bei welchen energiereiche Alkane mit nicht brennbaren Komponenten, wie z. B. Stickstoff, CO2 oder Wasserdampf, verunreinigt sind. Zu den Schwachgasen zählen Restgase in der Chemie und der Stahlindustrie, Restgase von Brennstoffzellen, Gas von Holzvergasern, Spülgase von Druckwechselanlagen sowie Deponieabgase. Wasserstoff und Ammoniak, die ebenfalls im Vergleich zu Erdgas oder Propangas einen deutlich geringeren Heizwert aufweisen, werden im Zusammenhang mit der Anmeldung ebenfalls als Schwachgase bezeichnet.

Bei Brenngasen mit geringerem Heizwert ist der Wärmekapazitätsstrom des abströmenden Abgases wesentlich größer als der der zugeführten Verbrennungsluft, so dass trotz hoher Luftvorwärmung das Abgas weniger abgekühlt wird.

### AUFGABE UND LÖSUNG

Es ist die Aufgabe der Erfindung, einen Rekuperator für einen Rekuperatorbrenner sowie einen Rekuperatorbrenner zu schaffen, welche auch bei Einsatz von Schwachgasen einen feuerungstechnischen Wirkungsgrad von mindestens 80% durch ein Absenken der Abgastemperatur auf 300°C oder weniger erlauben.

Diese Aufgaben werden gelöst durch den Rekuperator mit den Merkmalen des Anspruchs 1 und den Rekuperatorbrenner mit den Merkmalen des Anspruchs 12.

Gemäß einem ersten Aspekt wird ein Rekuperator für einen Rekuperatorbrenner, mit einem in Umfangsrichtung geschlossenen Gehäuse, das einen in Längsrichtung durchströmbaren Abgaskanal umgibt, und mit einer Vielzahl an in dem Abgaskanal angeordneten Wärmeübertragerrohren geschaffen, wobei an der kalten Seite des Abgaskanals ein erster Anschlussraum mit einem ersten Zuführanschluss für Verbrennungsluft und ein zweiter Anschlussraum mit einem zweiten Zuführanschluss für ein Brenngas vorgesehen sind, wobei der Abgaskanal mindestens in ein mit dem ersten Anschlussraum fluidisch verbundenes erstes Segment und ein mit dem zweiten Anschlussraum fluidisch verbundenes zweites Segment, in welchen jeweils einen Teil der Wärmeübertragerrohre angeordnet sind und welche parallel von dem Abgas durchströmbar sind, so unterteilt ist, dass ein Verhältnis des Wärmekapazitätsstroms der kalten Seite zu dem Wärmekapazitätsstrom der heißen Seite zwischen 0,9 und 1,1 beträgt.

Im Zusammenhang mit der Anmeldung die Wörter "ein", "eine", "eines", etc. lediglich als unbestimmte Artikel verwendet und sollen nicht als Zahlwort interpretiert werden. Die Begriffe "erster" und "zweiter" dienen lediglich der Unterscheidung von Elementen und geben keine Reihenfolge der Elemente an.

Das Abgas durchströmt die zwei oder mehr Segmente gleichmäßig. Dadurch werden sowohl die Verbrennungsluft als auch das Brenngas mittels des Abgases in den Segmenten des Rekuperators erwärmt. Durch Zufuhr von Verbrennungsluft und Brenngas an der kalten Seite wird der Wärmekapazitätsstrom der kalten Seite gesteigert, sodass der Wärmekapazitätsstrom der kalten Seite nahezu gleich dem Wärmekapazitätsstrom der heißen Seite ist. Als Wärmekapazitätsstrom wird das Produkt aus Massenstrom und Wärmekapazität bezeichnet. Durch die zumindest annährend gleichen Wärmekapazitätsströme kann das Abgas in etwa in dem Maß abgekühlt werden, wie die Verbrennungsluft und das Brenngas erwärmt werden. Wenn z.B. bei einer Abgaseintrittstemperatur von 1000 °C die Verbrennungsluft und das Brenngas auf 800 °C vorgewärmt werden, wird das Abgas im selben Maße abgekühlt, d.h. unter 250 °C.

In einer Ausgestaltung ist der Abgaskanal in drei Segmente unterteilt, wobei die in den Segmenten angeordneten Wärmeübertragerrohre parallel von drei Gasströmen, insbesondere einer Primärluft, einer Sekundärluft und dem Brenngas, durchströmbar sind. Eine Aufteilung der Verbrennungsluft in Primärluft und Sekundärluft dient einer Stufenverbrennung, durch welche eine thermische Nox-Bildung reduziert werden kann. Für die drei Segmente sind dabei in vorteilhaften Ausgestaltungen der separate Anschlussräume mit jeweils einem eigenen Zuführanschluss vorgesehen.

In einer Ausgestaltung weisen die drei Segmente jeweils gleiche Strömungsquerschnitte auf. Es sind jedoch auch andere Unterteilungen denkbar. Die Aufteilung in die Segmente ist je nach Anwendungsfall durch den Fachmann geeignet vornehmbar.

Die Aufteilung in Segmente erfolgt in einer Ausgestaltung ausschließlich durch eine Zuordnung der Wärmeübertragerrohre zu einem Anschlussraum, wobei das Abgas frei zwischen den Segmenten strömt.

In einer anderen Ausgestaltung sind zwischen den Segmenten Füllelemente vorgesehen, um einen Strömungsquerschnitt, insbesondere eine Spaltweite zwischen als Flachrohren gestalteten Wärmeübertragerrohren, zu verringern. Die Füllelemente sind in einer Ausgestaltung als Lochplatten aus einem hitzebeständigen Material, insbesondere aus Stahl, gestaltet. In anderen Ausgestaltungen sind Wellblecheinlagen als Füllelemente vorgesehen.

In einer Ausgestaltung sind die Wärmeübertragerrohre an der kalten Seite und/oder an der heißen Seite in einer beabstandet zu dem Gehäuse angeordneten Anschlussplatte aufgenommen, wobei zwischen der Anschlussplatte und dem Gehäuse eine Auslassöffnung bzw. eine Einlassöffnung für den Abgaskanal gebildet ist. Das Abgas kann dabei von allen Seiten in den Abgaskanal einströmen. An der kalten Seite ist in vorteilhaften Ausgestaltungen ein die Enden der Wärmeübertragerrohre umschließender Sammelraum mit einem Ablgasstutzen für das Abgas vorgesehen.

In einer Ausgestaltung ist in den Wärmeübertragerrohren des zweiten Segments ein Katalysator, insbesondere ein Katalysator für eine Ammoniakspaltung, angeordnet. Aufgrund einer niedrigen Flammengeschwindigkeit ist es normalerweise nicht möglich, Ammoniak direkt zu zünden. Bei einer Vorwärmung des als Brenngas eingesetzten Ammoniaks in den Wärmeübertragerrohren spaltet sich Ammoniak teilweise, sodass Wasserstoff gebildet wird, welcher eine Zündung fördert. Dieser Effekt wird in einer Ausgestaltung dadurch gesteigert, dass in einem Teil oder allen Wärmeübertragerrohren des zweiten Segments, d.h. in Wärmeübertragerrohren, in welchen das Brenngas erwärmt wird, ein Katalysator, beispielweise ein Gewebe aus Nickeldraht, eingebracht ist.

Alternativ oder zusätzlich ist in einer Ausgestaltung in dem Abgaskanal, in einem Abgasstutzen und/oder nachgeschaltet zu dem Abgasstutzen ein Katalysator, insbesondere ein Katalysator für eine Oxidation von Ammoniak, angeordnet. Bei Ammoniak als Brenngas können je nach Temperatur und Verweilzeit in der Heizkammer Spuren des Ammoniaks im Abgas verbleiben. In einer Ausgestaltung ist für diesem Fall ein Katalysator dem Abgasstutzen nachgeschaltet, mit dem die Reste des Ammoniaks oxidiert werden.

In einer Ausgestaltung ist in dem Gehäuse ein zentrales Rohr für eine Startheizung angeordnet, wobei der Abgaskanal das zentrale Rohr umgibt. Die Wärmeübertragerrohre sind dabei um das zentrale Rohr angeordnet. Die Startheizung dient einem Anfahren des Rekuperatorbrenners, insbesondere bei einer Verwendung mit einem Schwachgas, dessen Heizwert sehr niedrig, insbesondere kleiner als 1 kWh/m3 ist. Die Startheizung umfasst in einer Ausgestaltung eine Gaslanze für eine Zufuhr eines Gases mit einem höheren Heizwert und/oder eine Elektroheizung.

Das Gehäuse weist in vorteilhaften Ausgestaltungen einen kreisförmigen oder einen polygonförmigen Querschnitt auf, wobei der Abgaskanal in koaxial angeordnete, ringförmige Segmente unterteilt ist. Die Aufteilung erlaubt eine gleichmäßige Durchströmung aller Segmente. An der kalten Seite sind dabei in Ausgestaltungen koaxial angeordnete, ringförmige Anschlussräume zu den Segmenten vorgesehen.

Die Wärmeübertragerrohre sind vorzugsweise als Flachrohre gestaltet, welche insbesondere in konzentrischen Kreisen angeordnet sind. Als Flachrohre werden Wärmeübertragerrohre bezeichnet, die in einem der Wärmeübertagung dienenden Abschnitt einen abgeflachten Spaltquerschnitt aufweisen. Enden der Flachrohre, mit welchen diese insbesondere mit den Anschlussplatten verbunden sind, sind dabei in Ausgestaltungen rund oder polygonal. Rekuperatoren mit Flachrohren werden auch als Flachrohrwärmeübertrager bezeichnet. Zwischen den Flachrohren sind dabei in einer Ausgestaltung Wellblecheinlagen für eine Vergrößerung der Wärmeübertragerfläche und eine Verringerung der Spaltweite zwischen den Flachrohren angeordnet.

Gemäß einem zweiten Aspekt wird ein Rekuperatorbrenner mit einem Rekuperator geschaffen, wobei der Rekuperator ein in Umfangsrichtung geschlossenes Gehäuse, das einen in Längsrichtung durchströmbaren Abgaskanal umgibt, und eine Vielzahl an in dem Abgaskanal angeordneten Wärmeübertragerrohren umfasst, wobei der Abgaskanal in mindestens zwei Segmente für eine Erwärmung der Verbrennungsluft und des Brenngases unterteilt ist.

Die Wärmeübertragerrohre des ersten Segments und des zweiten Segments münden in einer Ausgestaltung an der heißen Seite in einem von einem Brennraumgehäuse umgebenen Brennraum.

In einer Ausgestaltung ist der Abgaskanal in drei Segmente unterteilt ist, wobei die in den Segmenten angeordneten Wärmeübertragerrohre parallel von drei Gasströmen, insbesondere Primärluft, Sekundärluft und dem Brenngas, durchströmbar sind, wobei die Wärmeübertragerrohre des dritten Segments an der heißen Seite in einem das Brennraumgehäuse umgebenden Luftleitgehäuse münden. Das dritte Segment umgibt dabei in vorteilhaften Ausgestaltungen das erste und das zweite Segment.

Die Gestaltung erlaubt eine Stufenverbrennung, wobei vorgewärmt Primärluft und vorgewärmtes Brenngas der Brennkammer für einen Verbrennungsprozess zugeführt werden. Ein Restgas dieses Verbrennungsprozesses wird mit der in dem dritten Segment vorgewärmten Sekundärluft verbrannt, vorzugsweise in einer flammenlosen Oxidation, um eine Bildung von Stickoxiden zu unterbinden.

Das Brennraumgehäuse und das Luftleitgehäuse weisen in Ausgestaltungen des Rekuperatorbrenners zu diesem Zweck Auslassdüsen zu dem Ofenraum auf.

### KURZBESCHREIBUNG DER ZEICHNUNGEN

Weitere Vorteile und Aspekte der Erfindung ergeben sich aus den Ansprüchen und aus der Beschreibung eines Ausführungsbeispiels der Erfindung, das nachfolgenden anhand der Figuren erläutert ist. Dabei zeigen:
- Fig. 1: einen an einer Ofenwand angeordneten Rekuperatorbrenner mit einem Rekuperator in einer längsgeschnittenen Darstellung,
- Fig. 2: eine Schnittansicht II-II eines Anschlusskopfs des Rekuperators gemäß Fig. 1,
- Fig. 3: eine Unteransicht des Rekuperatorbrenners gemäß Fig. 1, und
- Fig. 4:: eine Schnittansicht des Rekuperators gemäß Fig. 1.

### DETAILLIERTE BESCHREIBUNG DER AUSFÜHRUNGSBEISPIELE

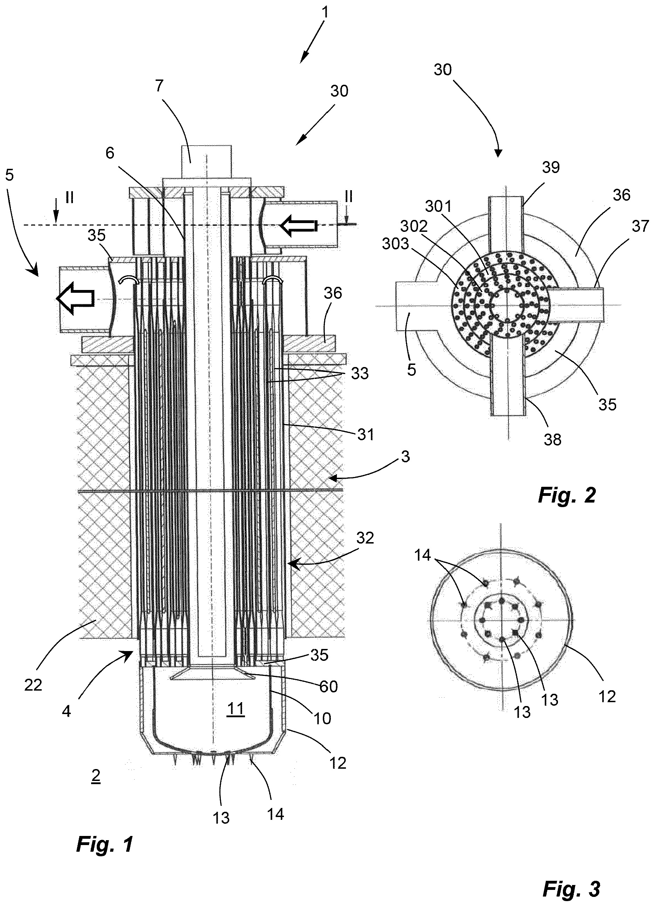

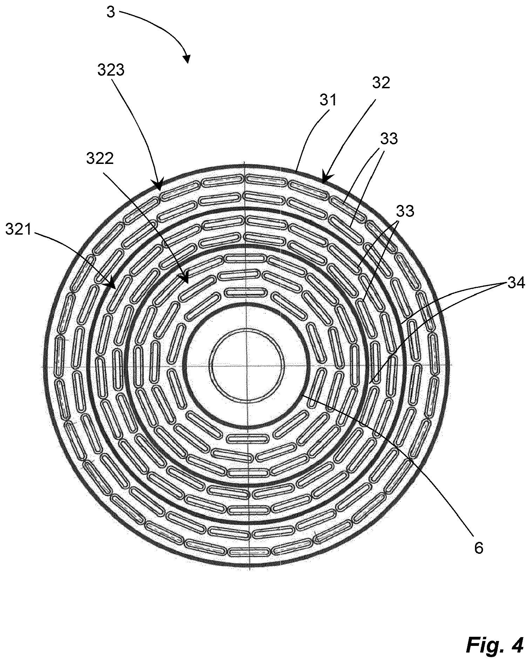

Die Fig. 1 bis 3 zeigen ein Ausführungsbeispiel eines Rekuperatorbrenners 1 umfassend einen Wärmeüberträger 3 für eine Vorwärmung von Verbrennungsluft und Brennstoff. Fig. 4 zeigt eine Schnittansicht des Rekuperators 3.

Der dargestellte Rekuperatorbrenner 1 ist insbesondere mit sogenannte Schwachgasen betreibbar, wobei durch den Rekuperator 3 sowohl eine zugeführte Verbrennungsluft als auch ein zugeführtes Brenngas unter Nutzung der Abgasenergie vorgewärmt werden.

Der dargestellte Rekuperatorbrenner 1 dient beispielsweise einer Beheizung eines Ofenraums 2 und ist dazu an einem Durchbruch einer Ofenwand in einer Ofenisolierung 22 angeordnet.

Wie am besten in Fig. 4 erkennbar, handelt es sich bei dem dargestellten Rekuperator 3 um einen Flachrohrwärmeübertrager mit einem Gehäuse 31, das einen kreisförmigen Querschnitt aufweist. Das Gehäuse 31 umgibt einen Abgaskanal 32, in dem Flachrohre 33 aufgenommen sind. Die Flachrohre 33 sind entlang mehrerer, in dem dargestellten Ausführungsbeispiel sieben, konzentrischer Kreise in dem Gehäuse 31 angeordnet.

Die Flachrohre 33 sind an beiden Enden in Anschlussplatten 35 aufgenommen. Die Flachrohre 33 sind mit den Anschlussplatten 35 dicht verbunden, beispielweise mit diesen verlötet. Die Flachrohre 33 sind länger als das Gehäuse 31 und die Anschlussplatten 35 sind jeweils versetzt zu Enden des Gehäuses 31 angeordnet, sodass zwischen den Enden und den Anschlussplatten 35 eine Einlassöffnung 4 und eine Auslassöffnung 5 für das Abgas gebildet wird. An der kalten Seite des Rekuperators 3 ist eine Flanschplatte 36 vorgesehen, zur Anbringung des Rekuperators 3 an der Ofenwandung.

Der Abgaskanal 32 ist in dem dargestellten Ausführungsbeispiel in drei Segmente 321, 322, 323 unterteilt, welche parallel von dem Abgas durchströmbar sind. Jedem Segment 321, 322, 333 ist ein Teil der Flachrohre 33 zugeteilt.

Der Rekuperator 3 weist einen außerhalb des Ofenraums 2, an einer kalten Seite des Rekuperators 3 angeordneten Anschlusskopf 30 zur Zufuhr von Verbrennungsluft und Brennstoff auf. Der Anschlusskopf 30 ist in Fig. 2 quergeschnittenen dargestellt. Wie in Fig. 2 erkennbar, weist der dargestellte Anschlusskopf 30 drei getrennte Zuführanschlüsse 37, 38, 39 für eine stofflich getrennte Zufuhr von drei Gasströmen zu den Flachrohren 33 der drei Segmente 321, 322, 323 auf. In dem dargestellten Ausführungsbeispiel sind ein erster Zuführanschluss 37 für eine Primärluftzufuhr, ein zweiter Zuführanschluss 38 für eine Brennstoffzufuhr und ein dritter Zuführanschluss 39 für eine Sekundärluftzufuhr vorgesehen. Die Zuführanschlüsse 37, 38, 39 münden jeweils in einem Anschlussraum 301, 302, 303. Der zweite Zuführanschluss 38 und der dritte Zuführanschluss 39 sind in dem dargestellten Ausführungsbeispiel um 90° versetzt zu dem dazwischen angeordneten ersten Zuführanschluss 37 angeordnet. Es sind jedoch auch andere Anordnungen denkbar. Die Anschlussräume 301, 302, 303 weisen jeweils einen kreisringförmigen Querschnitt auf und sind konzentrisch zu der Mittelachse des Rekuperators 3 angeordnet. Der erste Anschlussraum 301 liegt dabei zwischen dem innenliegenden zweiten Anschlussraum 302 und dem außenliegenden dritten Anschlussraum 303. Die Anschlussräume 301, 302, 303 sind durch Stege stofflich getrennt.

In dem dargestellten Ausführungsraum sind die Segmente 321, 322, 323 jeweils kreisringförmig und konzentrisch zu einer zentralen Achse des Rekuperators 3 angeordnet. Eine Größe und/oder Gestaltung der Segmente 321, 322, 323 ist dabei je nach Anwendungsfall durch den Fachmann geeignet wählbar. In dem dargestellten Ausführungsbeispiel sind ein mittig angeordnetes erstes Segment 321 und ein innenliegendes zweites Segment 322 so gewählt, dass sie die gleiche Anzahl an Flachrohren 33 und zumindest in etwa den gleichen Strömungsquerschnitt um die Flachrohre 33 aufweisen, sodass im Gebrauch in den Flachrohren 33 geführte Gasströme zumindest im Wesentlichen gleich durch das um die Flachrohre 33 strömende Abgas erwärmt werden.

Zwischen den Segmenten 321, 322, 323 sind Füllelemente 34 vorgesehen, um eine Spaltbreite zwischen den Flachrohren zu reduzieren. Die Füllelemente 34 sind vorzugsweise derart gewählt, dass diese eine Strömung zwischen den Segmente 321, 322, 323 nicht verhindert. Beispielsweise handelt es sich bei den Füllelementen um Lochplatten aus einem hitzebeständigen Stahl, welche eine Verwirbelung des Abgasstroms bewirken.

Der dargestellte Rekuperatorbrenner 1 dient einer Stufenverbrennung.

Für eine Stufenverbrennung weist der Rekuperatorbrenner 1 an der heißen Seite eine von einem Brennkammergehäuse 10 umgebene Brennkammer 11, auch als Primärbrennkammer bezeichnet, sowie ein das Brennkammergehäuse 10 umgebendes Luftleitgehäuse 12 auf. Das Brennkammergehäuse 10 und das Luftleitgehäuse 12 weisen jeweils Auslassdüsen 13, 14 zu dem Ofenraum 2 auf.

Fig. 3 zeigt eine Unteransicht des Rekuperatorbrenners 1 mit den an dem Brennkammergehäuse 10 vorgesehenen Auslassdüsen 13 und den an dem Luftleitgehäuse 12 vorgesehenen Auslassdüsen 14. Die Auslassdüsen 13, 14 sind in dem dargestellten Ausführungsbeispiel jeweils gleichmäßig verteilt entlang eines zu der Mittelachse des Rekuperators konzentrischen Kreises angeordnet. Die Anordnung und Anzahl der der Auslassdüsen 13, 14 ist lediglich schematisch.

Der Brennkammer 11 werden eine in dem ersten Segment 321 erwärmte Primärluft und ein in dem zweiten Segment 322 erwärmter Brennstoff für eine Oxidation zugeführt. Ein aus der Brennkammer 11 entlassener Reaktionsgasstrom wird über die Auslassdüsen 13 dem Ofenraum 2 zugeführt und dort bedarfsweise unter Zugabe der in dem dritten Segment vorgewärmten Sekundärluft vollständig oxidiert.

Konzentrisch zur Mittelachse des Rekuperators 3 ist ein Rohr 6 vorgesehen, welches in der Brennkammer 11 mündet. An dem in der Brennkammer angeordneten Ende des Rohrs 6 ist eine Prallplatte 60 vorgesehen.

In dem Rohr 6 ist ein Zusatzeinrichtung 7 für ein Anfahren des Rekuperatorbrenners 1 vorgesehen, beispielsweise in Form einer zentralen Gaslanze, um dem Brennraum 11 Brennstoff mit einem höheren Heizwert zuzuführen. Beispielsweise wird zum Aufheizen des Ofenraums 2 Brennstoff mit einem höheren Heizwert z.B. Erdgas über die Zusatzeinrichtung 7 zugeführt. In der Brennkammer 11 wird eine Flamme gezündet, deren heiße Abgase über die Auslassdüsen 13 in den Ofenraum 2 gelangen, um diesen aufzuheizen. Ist eine gewünschte Temperatur erreicht, kann der Rekuperatorbrenner 1 mit dem Schwachgas betrieben werden.

Nach dem Anfahren werden Oxidationsprozesse in der Brennkammer 11 und in dem Ofenraum 2 vorzugsweise so geführt, dass einen Flammenbildung unterdrückt und damit eine thermische NOx-Bildung vermieden wird.

Ein bei der Verbrennung erzeugtes Abgas wird zumindest teilweise den Abgaskanal 32 zugeführt und erwärmt in den Segmenten 321, 322, 333 sowohl die Verbrennungsluft als auch das zugeführte Brenngas. Durch die Erwärmung der Verbrennungsluft und des Brenngases wird der Wärmekapazitätsstrom der kalten Seite erhöht, sodass der Wärmekapazitätsstrom der kalten Seite in etwa gleich dem Wärmekapazitätsstrom der heißen Seite ist.

Durch die gleichzeitige Erwärmung der Verbrennungsluft und des Brenngases kann so auch bei Schwachgasen eine Abgastemperatur auf unter 300 °C abgesenkt werden, sodass ein feuerungstechnischer Wirkungsgrad von über 80% erreicht werden kann. Gleichzeitig wird eine zu hohe Luftvorwärmung, welche zu einer thermischen Stickoxidbildung führen kann, vermieden.

Dadurch ist eine Effizienzsteigerung des Rekuperatorbrenners 1 ohne Vergrößerung der Wämeübertragerfläche möglich, wie nachfolgend anhand eines Ausführungsbeispiels eines 50 kW Brenner mit Flachrohrwärmeübertrager für Schwachgas, Wasserstoff oder Ammoniak mit einer Kenngröße von kxA = 50 W/K (A=Rekuperatorfläche, k=Wärmedurchgangskoeffizient) bei einer Abgaseintrittstemperatur von 1000°C ausgeführt.

| | | Schwachgas | Wasserstoff | Ammoniak |
|---|---|---|---|---|
| Heizwert des Brenngases | kWh/m3 | 1,5 | 3,0 | 4,0 |

| 1) Rekuperator ohne Brennstoffvorwärmung | | | | |
|---|---|---|---|---|
| Wärmekapazitätsströme Luft/Abgas | -- | 0,58 | 0,78 | 0,7 |
| Luftvorwärmung | °C | 850 | 790 | 790 |
| Abgastemperatur0 | °C | 510 | 385 | 450 |
| feuerungstechnischer Wirkungsgrad | -- | 0,70 | 0,82 | 0,75 |

| 2) Rekuperator mit Brennstoffvorwärmung | | | | |
|---|---|---|---|---|
| Wärmekapazitätsströme | -- | 1,05 | 1,06 | 0,95 |
| Luft+Brennstoff/Abgas | | | | |
| Luftvorwärmung | °C | 650 | 680 | 670 |
| Abgastemperatur0 | °C | 320 | 350 | 360 |
| feuerungstechnischer Wirkungsgrad | -- | 0,82 | 0,85 | 0,79 |
| Effizienz Steigerung von 2) gegen 1) | % | 14 | 4 | 5 |

In einer Ausgestaltung wird die Anzahl der Flachrohre 33 gleichmäßig auf die drei Segmente 321, 322, 323 verteilt. Je nach Brenngas ist in anderen Ausgestaltungen eine andere Aufteilung vorgesehen.

## Patentansprüche

1. Rekuperator für einen Rekuperatorbrenner (1), mit einer heißen Seite und einer kalten Seite, mit einem in Umfangsrichtung geschlossenen Gehäuse (31), das einen in Längsrichtung durchströmbaren Abgaskanal (32) umgibt, und mit einer Vielzahl an in dem Abgaskanal angeordneten Wärmeübertragerrohren, wobei an der kalten Seite des Abgaskanals (32) ein erster Anschlussraum (301) mit einem ersten Zuführanschluss (37) für Verbrennungsluft und ein zweiter Anschlussraum (302) mit einem zweiten Zuführanschluss (38) für ein Brenngas vorgesehen sind, **dadurch gekennzeichnet, dass** der Abgaskanal (32) mindestens in ein mit dem ersten Anschlussraum (301) fluidisch verbundenes erstes Segment (321) und ein mit dem zweiten Anschlussraum (302) fluidisch verbundenes zweites Segment (322), in welchen jeweils einen Teil der Wärmeübertragerrohre (33) angeordnet ist und welche parallel von dem Abgas durchströmbar sind, so unterteilt ist, dass ein Verhältnis des Wärmekapazitätsstroms der kalten Seite zu dem Wärmekapazitätsstrom der heißen Seite zwischen 0,9 und 1,1 beträgt.

2. Rekuperator nach Anspruch 1, **dadurch gekennzeichnet, dass** der Abgaskanal (32) in drei Segmente (321, 322, 323) unterteilt ist, wobei die in den Segmenten (321, 322, 323) angeordneten Wärmeübertragerrohre parallel von drei Gasströmen, insbesondere einer Primärluft, einer Sekundärluft und dem Brenngas, durchströmbar sind.

3. Rekuperator nach Anspruch 2, **dadurch gekennzeichnet, dass** die drei Segmente (321, 322, 323) gleiche Strömungsquerschnitte aufweisen.

4. Rekuperator nach Anspruch 1, 2 oder 3, **dadurch gekennzeichnet, dass** zwischen den Segmenten (321, 322, 323) Füllelemente (34) vorgesehen sind, um einen Strömungsquerschnitt zu verringern, wobei insbesondere die Füllelemente (34) als Lochplatten gestaltet sind.

5. Rekuperator nach einem der Ansprüche 1 bis 4, **dadurch gekennzeichnet, dass** die Wärmeübertragerrohre an der kalten Seite und/oder an der heißen Seite in einer beabstandet zu dem Gehäuse (31) angeordneten Anschlussplatte (35) aufgenommen sind, wobei zwischen der Anschlussplatte (35) und dem Gehäuse (31) eine Auslassöffnung bzw. eine Einlassöffnung für den Abgaskanal (32) gebildet ist.

6. Rekuperator nach einem der Ansprüche 1 bis 5, **dadurch gekennzeichnet, dass** in den Wärmeübertragerrohren des zweiten Segments (322) ein Katalysator, insbesondere ein Katalysator für eine Ammoniakspaltung angeordnet ist.

7. Rekuperator nach einem der Ansprüche 1 bis 6, **dadurch gekennzeichnet, dass** in dem Abgaskanal (32), in einem Abgasstutzen (5) und/oder nachgeschaltet zu dem Abgasstutzen (5) ein Katalysator, insbesondere ein Katalysator angeordnet ist.

8. Rekuperator nach einem der Ansprüche 1 bis 7, **dadurch gekennzeichnet, dass** in dem Gehäuse (31) ein zentrales Rohr (6) für eine Startheizung angeordnet ist, wobei der Abgaskanal (32) das zentrale Rohr (6) umgibt.

9. Rekuperator nach einem der Ansprüche 1 bis 8, **dadurch gekennzeichnet, dass** das Gehäuse (31) einen kreisförmigen oder einen polygonförmigen Querschnitt aufweist, wobei der Abgaskanal (32) in koaxial angeordnete, ringförmige Segmente (321, 322, 323) unterteilt ist.

10. Rekuperator nach Anspruch 9, **dadurch gekennzeichnet, dass** koaxial angeordnete, ringförmige Anschlussräume (301, 302, 303) zu den Segmenten (321, 322, 323) vorgesehen sind.

11. Rekuperator nach einem der Ansprüche 1 bis 10, **dadurch gekennzeichnet, dass** die Wärmeübertragerrohre als Flachrohre (33) gestaltet sind, welche insbesondere in konzentrischen Kreisen angeordnet sind.

12. Rekuperatorbrenner mit einem Rekuperator nach einem der Ansprüche 1 bis 11.

13. Rekuperatorbrenner nach Anspruch 12, **dadurch gekennzeichnet, dass** die Wärmeübertragerrohre des ersten Segments (321) und dies zweiten Segments (322) an der heißen Seite in einem von einem Brennraumgehäuse (10) umgebenen Brennraum (11) münden.

14. Rekuperatorbrenner nach Anspruch 13, **dadurch gekennzeichnet, dass** der Abgaskanal in drei Segmente unterteilt ist, wobei die Wärmeübertragerrohre des dritten Segments (323) an der heißen Seite in einem das Brennraumgehäuse (10) umgebenden Luftleitgehäuse (12) münden.

15. Rekuperatorbrenner nach Anspruch 14, **dadurch gekennzeichnet, dass** das Brennraumgehäuse (10) und das Luftleitgehäuse (12) Auslassdüsen (13, 14) aufweisen.

## Claims

1. Recuperator for a recuperative burner (1), having a hot side and a cold side, having a housing (31) which is closed in the circumferential direction and which surrounds an exhaust gas duct (32) through which air can flow in the longitudinal direction, and having a plurality of exchangearranged in the exhaust gas duct, wherein a first connection chamber (301) with a first supply connection (37) for combustion air and a second connection chamber (302) with a second supply connection (38) for a combustion gas are provided on the cold side of the exhaust gas duct (32), **characterized in that** the exhaust gas duct (32) is subdivided at least into a first segment (321) fluidically connected to the first connection chamber (301) and a second segment (322) fluidically connected to the second connection chamber (302), in each of which a part of the heat exchanger tubes (33) is arranged and through which the exhaust gas can flow in parallel, such that a ratio of the heat capacity flow of the cold side to the heat capacity flow of the hot side is between 0.9 and 1.1.

2. Recuperator according to claim 1, **characterized in that** the exhaust gas duct (32) is subdivided into three segments (321, 322, 323), wherein three gas streams, in particular a primary air, a secondary air and the combustion gas, can flow through the heat exchange tubes arranged in the segments (321, 322, 323) in parallel.

3. Recuperator according to claim 2, **characterized in that** the three segments (321, 322, 323) have the same flow cross-sections.

4. Recuperator according to claim 1, 2 or 3, **characterized in that** filling elements (34) are provided between the segments (321, 322, 323) in order to reduce a flow cross-section, in particular the filling elements (34) being designed as perforated plates.

5. Recuperator according to any one of claims 1 to 4, **characterized in that** the heat exchange tubes, on the cold side and/or on the hot side, are accommodated in a connecting plate (35) arranged at a distance from the housing (31), an outlet opening or an inlet opening for the exhaust gas duct (32), respectively, being formed between the connecting plate (35) and the housing (31).

6. Recuperator according to any one of claims 1 to 5, **characterized in that** a catalyst, in particular a catalyst for ammonia splitting, is arranged in the heat exchange tubes of the second segment (322).

7. Recuperator according to any one of claims 1 to 6, **characterized in that** a catalyst, in particular a catalyst, is arranged in the exhaust gas duct (32), in an exhaust gas pipe (5) and/or downstream of the exhaust gas pipe (5).

8. Recuperator according to any one of claims 1 to 7, **characterized in that** a central tube (6) for a starting heater is arranged in the housing (31), the exhaust gas duct (32) surrounding the central tube (6).

9. Recuperator according to any one of claims 1 to 8, **characterized in that** the housing (31) has a circular or polygon-shaped cross-section, the exhaust gas duct (32) being subdivided into coaxially arranged, annular segments (321, 322, 323).

10. Recuperator according to claim 9, **characterized in that** coaxially arranged, annular connection chamber (301, 302, 303) to the segments (321, 322, 323) are provided.

11. Recuperator according to any one of claims 1 to 10, **characterized in that** the heat exchange tubes are designed as flat tubes (33), which in particular are arranged in concentric circles.

12. A recuperative burner comprising a recuperator according to any one of claims 1 to 11.

13. Recuperative burner according to claim 12, **characterized in that** the heat exchange tubes of the first segment (321) and of the second segment (322), on the hot side, open into a combustion chamber (11) which is surrounded by a combustion chamber housing (10).

14. Recuperative burner according to claim 13, **characterized in that** the exhaust gas duct is subdivided into three segments, wherein the heat exchange tubes of the third segment (323), on the hot side, open into an air guide housing (12) surrounding the combustion chamber housing (10).

15. Recuperative burner according to claim 14, **characterized in that** the combustion chamber housing (10) and the air guide housing (12) have outlet nozzles (13, 14).

## Revendications

1. Récupérateur pour un brûleur récupérateur (1), avec un côté chaud et un côté froid, avec un boîtier (31) fermé dans le sens circonférentiel, qui entoure un conduit de gaz d'échappement (32) traversable dans le sens longitudinal, et une pluralité de tubes caloporteurs disposés dans le conduit de gaz d'échappement, sachant que sur le côté froid du conduit d'air d'échappement (32), un premier espace de raccordement (301) avec un premier raccord d'alimentation (37) pour air de combustion et un second espace de raccordement (302) avec un second raccord d'alimentation (38) pour un gaz combustible sont prévus, **caractérisé en ce que** le conduit de gaz d'échappement (32) est divisé au moins en un premier segment (321) en liaison fluidique avec le premier espace de raccordement (301) et un deuxième segment (322) en liaison fluidique avec le deuxième espace de raccordement (302), dans lesquels est disposé respectivement une partie des tubes caloporteurs (33) et qui sont traversables en parallèle par le gaz d'échappement, de telle sorte qu'un rapport entre le flux de capacité thermique du côté froid et le flux de capacité thermique du côté chaud est compris entre 0,9 et 1,1.

2. Récupérateur selon la revendication 1, **caractérisé en ce que** le conduit de gaz d'échappement (32) est divisé en trois segments (321, 322, 323), sachant que les tubes caloporteurs disposés dans les segments (321, 322, 323) sont traversables en parallèle par trois flux de gaz, notamment par un air primaire, un air secondaire et le gaz combustible.

3. Récupérateur selon la revendication 2, **caractérisé en ce que** les trois segments (321, 322, 323) présentent les mêmes sections d'écoulement.

4. Récupérateur selon la revendication 1, 2 ou 3, **caractérisé en ce que** des éléments de remplissage (34) sont prévus entre les segments (321, 322, 323) pour réduire une section d'écoulement, sachant que notamment les éléments de remplissage (34) sont conçus sous forme de plaques perforées.

5. Récupérateur selon l'une des revendications 1 à 4, **caractérisé en ce que** les tubes caloporteurs sur le côté froid et/ou sur le côté chaud sont logés dans une plaque de raccordement (35) disposée éloignée du boîtier (31), sachant qu'un orifice d'échappement ou un orifice d'admission est conçu pour le conduit de gaz d'échappement (32) entre la plaque de raccordement (35) et le boîtier (31).

6. Récupérateur selon l'une des revendications 1 à 5, **caractérisé en ce qu'**un catalyseur, notamment un catalyseur pour une dissociation de l'ammoniac, est disposé dans les tubes caloporteurs du deuxième segment (322).

7. Récupérateur selon l'une des revendications 1 à 6, **caractérisé en ce qu'**un catalyseur, notamment un catalyseur, est disposé dans le conduit de gaz d'échappement (32) dans une tubulure de gaz d'échappement (5) et/ou connecté en aval de la tubulure de gaz d'échappement (5).

8. Récupérateur selon l'une des revendications 1 à 7, **caractérisé en ce qu'**un tube central (6) pour un chauffage de démarrage est disposé dans le boîtier (31), sachant que le conduit de gaz d'échappement (32) entoure le tube central (6).

9. Récupérateur selon l'une des revendications 1 à 8, **caractérisé en ce que** le boîtier (31) présente une section circulaire ou polygonale, sachant que le conduit de gaz d'échappement (32) est divisé en segments (321, 322, 323) annulaires, disposés coaxialement.

10. Récupérateur selon la revendication 9, **caractérisé en ce que** des espaces de raccordement (301, 302, 303) annulaires, disposés coaxialement par rapport aux segments (321, 322, 323) sont prévus.

11. Récupérateur selon l'une des revendications 1 à 10, **caractérisé en ce que** les tubes caloporteurs sont conçus sous forme de tubes plats (33) qui sont disposés notamment en cercles concentriques.

12. Brûleur récupérateur avec un récupérateur selon l'une des revendications 1 à 11.

13. Brûleur récupérateur selon la revendication 12, **caractérisé en ce que** les tubes caloporteurs du premier segment (321) et du deuxième segment (322) sur le côté chaud débouchent dans une chambre de combustion (11) entourée d'un bâti de chambre à combustion (10).

14. Brûleur récupérateur selon la revendication 13, **caractérisé en ce que** le conduit de gaz d'échappement est divisé en trois segments, sachant que les tubes caloporteurs du troisième segment (323) sur le côté chaud débouchent dans un bâti conducteur d'air (12) entourant le bâti de chambre à combustion (10).

15. Brûleur récupérateur selon la revendication 14, **caractérisé en ce que** le bâti de chambre à combustion (10) et le bâti conducteur d'air (12) présentent des buses de sortie (13, 14).
